# EUROPEAN PATENT APPLICATION

(11) **EP 2 733 370 A1**
(43) Date of publication of application: **21.05.2014**
(21) Application number: 13191399.8
(22) Date of filing: 04.11.2013
(51) Int. Cl.: F16C 1/26

(54) **Sheath for a remote control cable**

(30) Priority: 20.11.2012 IT MI20121970
(71) Applicant: Tabo Otomotiv Makina Sanayi ve Tic. A.S., 34953 Tuzla - Istanbul (TR)
(72) Inventor: Bìlgìn, Halìl, 34730 Istanbul (TR)
(74) Representative: Giuli, Maurizio Mario Galdino

(57) **Abstract**

A sheath for a remote control cable (11) suitable for containing a freely movable control cable or rope (12) comprising an outer lining (13), at least an inner intermediate protective layer (14) and a further inner sheathing layer (15), in which cable sheath, the further inner intermediate sheathing layer (15) is composed of a metallic wire helically wound to produce an internal coiled sheath in which the metallic wire has a polygonal section with a side of the section curving outwardly (16) and inwardly facing the control cable or rope (12), generating a discontinuous contact surface regardless of the curvature of the whole sheath (11).

## Description

The present invention relates to a sheath for a remote control cable.

In the field of remote control, traction or thrust cables are used, such as so-called "push-pull" commands, which are positioned in suitable containment, protection and sliding sheaths.

These cables and consequently their respective sheaths, have a wide variety of uses in the industrial, nautical, agricultural, construction, railway, aeronautical, automotive fields, etc., in addition to particular special applications.

Both the cable and sheath must be positioned so as to resist a large number of cycles, in order postpone wear of the control itself, to the utmost.

As is known, the control consists of a cable or rope, consisting of a series of coiled wires, comprising one or more strands, which is caused to move inside the composite sheath.

The sheath comprises an outer covering, usually made of polyethylene, an intermediate tubular element for protection and/or stiffening and an inner element which facilitates the sliding of the cable or rope.

The intermediate tubular element for protection and/or stiffening consists of a coil of multi-strand metal wire immediately below the outer covering sheath.

The inner element which facilitates the sliding of the cable or rope, on the other hand, normally consists of a tube of plastic material, positioned between the coil of metallic wire and the sliding cable or rope. This arrangement is not particularly convenient for some applications and is not as resistant as may be required for certain applications with relevant flexural stress. At times PTFE is used, in order to have a greater flowability, with a low friction coefficient, but it has a high cost.

Consequently, in some particular applications, the tube made of plastic material is substituted with a sheath produced with a band made of steel wire, also coiled, which is in direct contact with the cable or rope push-pull sliding inside the control.

As the remote control unit, frequently when operating is, as already indicated, subject to more or less marked curvatures and bending, the coils of the band are consequently in direct contact with the section of cable or rope. The band having a rectangular or square section creates, in correspondence with its vertexes, more or less sharp edges which are in direct contact with the cable or rope, when it is bent in the operative phase.

This causes contact with the cable or rope push-pull sliding inside the control which can become damaged and this sliding contact with the edges of the coils of the plate in the bending area can lead to rapid wear.

Numerous attempts have in fact been made in recent years for finding a solution to the problem by inserting specific materials which reduce the friction, such as lubricating greases, or tubes made of plastic material.

Most of these solutions have immediately given some response, avoiding rapid wear, which however is subsequently verified with the functioning of the control, when the material which facilitates its sliding has lost its characteristics or has been reduced due to loss or for some other reason due to the passing of time.

The containment sheaths of the cable or rope of these remote controls do not therefore satisfy the requirements of the market, in particular due to the above-mentioned onerous uses or significant stress.

A general objective of the present invention is therefore to solve the above drawbacks of the known art in an extremely simple, economical and particularly functional manner.

A further objective of the present invention is to provide a sheath for remote control cables which does not have any type of interference or abrasive contact or minimizes this, with respect to the push-pull cable or rope which is sliding in its interior.

Another objective of the present invention is to provide a sheath for remote control cables which can be produced with the usual construction techniques without having to cause upheavals in the machines currently used for producing it.

Yet another objective of the present invention is to provide a sheath for remote control cables which preserves, with time, the possible material which facilitates the sliding in its interior, guaranteeing its effective functioning.

In view of the above objectives, according to the present invention, a sheath for a remote control cable has been conceived, having the characteristics specified in the enclosed claims.

According to the invention, a sheath is envisaged for a remote control cable suitable for containing a freely movable control cable or rope comprising an outer lining, at least an inner intermediate protective layer and a further inner sheathing layer. The cable sheath envisages that the further inner sheathing layer is composed of a metallic wire helically wound to produce an internal sheath with juxtaposed coils, in which the metallic wire has a polygonal section with a side of the section curving outwardly and inwardly facing the control cable or rope, generating a discontinuous contact surface regardless of the curvature of the whole sheath.

The sheath in the polygonal section preferably consists of a semi-circumference.

In the sheath for a remote control cable of the present invention, the metallic wire of the further inner sheathing layer is advantageously laminated in steel, coated with Teflon or in any case plasticized with a material that reduces friction.

Furthermore, in the sheath of the invention, grooves are situated between juxtaposed coils of the helically wound metallic wire producing the internal sheath.

The structural and functional characteristics of the present invention and its advantages with respect to the known art will appear more evident from the following description, referring to the enclosed drawings which, *inter alia,* show a schematization of an embodiment of a sheath for remote control cables produced according to the same invention. In the drawings:
- figure 1 shows a raised schematic side view, partially cross-sectional in a longitudinal direction, of a sheath for a remote control cable suitable for receiving a control cable or rope produced according to the present invention;
- figure 2 shows a transversal section of the sheath of the invention shown in figure 1;
- figure 3 shows a raised schematic side view, partially cross-sectional in a longitudinal direction, of a coiled section which forms part of the sheath for remote control cables according to the present invention;
- figure 3A shows an enlarged sectional detail taken from figure 3;
- figure 4 shows a perspective view of a sectional segment of the sheath of the present invention in a bent position for containing a section of control cable or rope.

With reference to the figures in general, these illustrate a sheath for remote control cables according to the present invention, indicated with 11, suitable for containing a freely movable control cable or rope 12, for example consisting of a series of coiled metallic wires, comprising one or more strands.

As illustrated in the figures, the sheath 11 for a remote control cable or rope 12 comprises an outer lining 13, at least one inner intermediate protective layer 14 and a further inner intermediate sheathing layer 15.

The outer lining 13 is generally made of a plastic material, such as high-density polyethylene, usually black.

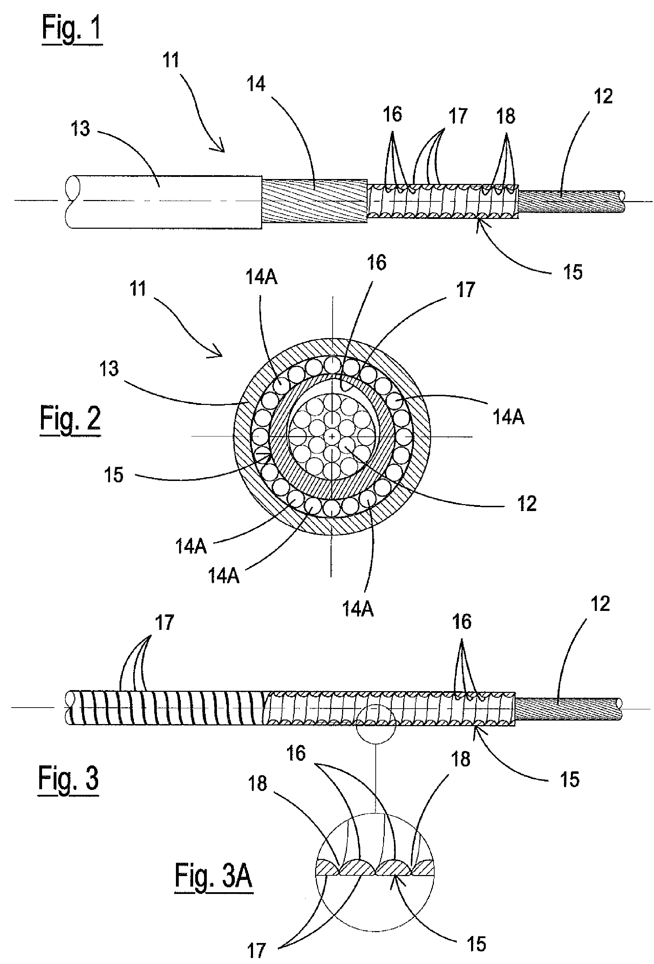

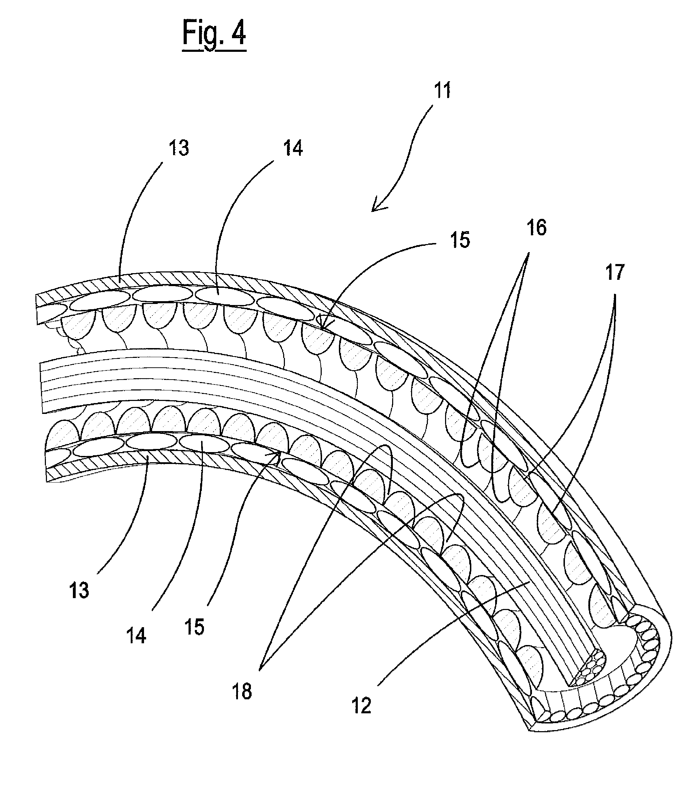

The inner intermediate protective layer with mechanical resistance to tensile and compression stress 14, which can possibly be produced in various layers, generally comprises a helically wound steel wire, in the example shown in the form of twenty-four coiled wires 14A. The further inner intermediate sheathing layer 15 comprises a sheath with a half-rounded metallic wire section, i.e. formed by a semi-circumference. The metallic wire is, for example, laminated or drawn in steel, possibly stainless steel, possibly coated with Teflon or in any case plasticized with a material which reduces friction. The metallic wire is helically wound producing an inner coiled sheath more or less distanced from each other or juxtaposed, as shown in figures 1 and 4.

Figure 1 shows how it is positioned inside the other parts forming the sheath for remote control cables according to the present invention.

This further inner intermediate sheathing layer 15 shown in the example is wound so that in its interior, there is a rounded part 16 of the half-rounded section of the metallic wire, creating a discontinuous surface which is only in local contact with the internal cable or rope 12. A flat part 17 of the half-rounded section of the helically wound metallic wire contemporaneously faces outwardly, creating a uniform coupling surface with the inner intermediate protective layer 14.

This arrangement of the rounded parts 16 therefore allows an extremely limited and localized contact to be obtained between the internal cable or rope and the further inner intermediate sheathing layer 15, regardless of the curvature of the whole sheath 11. This type of contact, in fact, advantageously also exists in the case of a strong curvature of the remote control, as shown in figure 4. According to the known art, on the contrary, in the presence of a quadrilateral section of the wire, if a curvature of the sheath was generated, an interference was created between consecutive edges of the sheath and the inner cable or rope.

More specifically, according to the invention, in addition to the localized contact, the inclusion of a further inner intermediate sheathing layer 15 with a half-rounded section in the surface facing the internal cable or rope 12 ensures that contact is created with a short segment of rounded surface which does not at all interfere with or cut the surface of the internal cable or rope 12.

The half-rounded section of the wire of the further inner intermediate sheathing layer 15 causes what can almost be defined as a rolling contact with the cable or rope 12 facilitating the bending and curvature action of the remote control unit.

Furthermore, availing of the grease in the internal interstice which is created between the inner cable or rope 12 and the further inner intermediate sheathing layer 15, this grease tends to penetrate the single coils in grooves 18 which are naturally formed. The grease distributed therein comes into contact with the cable 12 every time the control structure is bent, as shown in figure 4. The above grooves therefore almost act as a container which supplies said grease with every flexural or curvature stress, guaranteeing an easy, almost frictionless sliding and practically annulling the wear of the cable or rope 12 with time.

The section of wire does not necessarily have to be half-rounded, or a section of a semi-circumference, i.e. half of a circumference with is a polygon with infinite sides. It can also, in fact, be formed by an element having a classical polygonal section, for example with three or four sides, only one of which (that indicated with 16) must be curved towards the outside of the section, or more simply a circular section. In this way, the surface generated by the series of juxtaposed sides in the helix is not continuous so as to be able to be facing inwardly when the wire is helically wound, generating the further inner intermediate sheathing layer 15. Also in this case, in fact, according to the innovative concept of the present invention, a localized contact is created between the internal cable or rope 12 and the further inner intermediate sheathing layer 15 only limited to the curved or rounded segments of the section of helically wound metallic wire.

The metallic wire with a polygonal section and side of the curved section facing outwardly is, as already mentioned, arranged so as to face the control cable or rope 12, generating a discontinuous contact surface, thus having a discreet contact surface at certain points which never changes, whether the sheath be straight or bent in a rest position or for use.

In this non-limiting example, all the important features forming part of the present invention are present.

The objective indicated in the preamble of the description has therefore been achieved.

The forms of the structure for producing a sheath of the invention, as also the materials and assembly modes, can naturally differ from those shown for purely illustrative and non-limiting purposes in the drawings.

The protection scope of the present invention is therefore delimited by the enclosed claims.

## Claims

1. A sheath for a remote control cable (11) suitable for containing a freely movable control cable (12) comprising an outer lining (13), at least an inner intermediate protective layer with mechanical resistance to tensile and compression stress (14) and a further inner sheathing layer (15), **characterized in that** said further inner sheathing layer (15) is composed of a metallic wire helically wound to produce an internal coiled sheath in which said metallic wire has a polygonal section with a side of the section curving outwardly (16) and inwardly facing the control cable (12), generating a discontinuous contact surface regardless of the curvature of the whole sheath (11).

2. The sheath for a remote control cable according to claim 1, **characterized in that** said polygonal section consists of a semicircle.

3. The sheath for a remote control cable according to claim 1, **characterized in that** said polygonal section consists of a circumference.

4. The sheath for a remote control cable according to one or more of the previous claims, **characterized in that** said metallic wire of said further inner sheathing layer (15) is drawn or laminated in steel or stainless steel.

5. The sheath for a remote control cable according to one or more of the previous claims, **characterized in that** said metallic wire of said further inner sheathing layer (15) coated with Teflon or in any case plasticized with a material that reduces friction.

6. The sheath for a remote control cable according to one or more of the previous claims, **characterized in that** grooves (18) are situated between said coils of said helically wound metallic wire producing an internal sheath (15).

7. The sheath for a remote control cable according to one or more of the previous claims, **characterized in that** said coils of said metallic wire are juxtaposed.
